# EUROPEAN PATENT APPLICATION

(11) **EP 0 838 672 A1**
(43) Date of publication of application: **29.04.1998**
(21) Application number: 97203220.5
(22) Date of filing: 16.10.1997
(51) Int. Cl.: G01L 19/06, G01M 3/16

(54) **Device for transferring a pressure comprising a leak detector**

(30) Priority: 22.10.1996 NL 1004330
(71) Applicant: Badotherm International B.V., 3316 GM Dordrecht (NL)
(72) Inventor: Bastiaan, Michiel Klaas Bas, 4926 PJ Lage Zwaluwe (NL)
(74) Representative: Iemenschot, Johannes Andreas, Ir.

(57) **Abstract**

The invention relates to a device for transferring a pressure prevailing in a first medium to a second medium comprising a housing (1), a membrane (3), the edge of which is connected to the housing (1) and one side of which, together with the housing (1), forms a measuring chamber (2) which can be filled with the second medium, and the other side of which can be brought into contact with the first medium.

The device is provided with a detection means, by means of which, when the measuring chamber (2) has been filled with second medium, the presence of a leak in the membrane (3) can be detected. The detection means comprises a first and a second electrode, which are both arranged in the measuring chamber (2) or a space which is in direct communication therewith, which are electrically insulated from one another and which are each provided with an electrical connection, so that by means of the first and second electrode the electrical conductivity of medium present in the measuring chamber (2) can be measured.

## Description

The invention relates to a device for transferring a pressure prevailing in a first medium to a second medium, comprising a housing, a membrane, the edge of which is connected to the housing and one side of which, together with the housing, forms a measuring chamber which can be filled with the second medium, and the other side of which can be brought into contact with the first medium, and a detection means, by means of which, when the measuring chamber has been filled with second medium, the presence of a leak in the membrane can be detected.

A device of this kind is known from DE 39 41 369. The membrane of the known device is prestressed, as a result of which the membrane, when the device is not mounted, closes a contact which is present in the measuring chamber of the device. In use the pressure in the second medium (pressuretransfer medium) is slightly higher than the pressure in the first medium (process medium), so the contact is open.

The drawback of the known device is, that the closing of the contact depends on the prestress of the membrane. If the membrane is deformed, for instance as the result of bumping or the like, it is possible that the contact will not be closed although the membrane is leaking.

The object of the invention is to provide a device by means of which this drawback is eliminated.

According to the invention this object is achieved with an aforementioned device by the fact that the detection means comprises a first and a second electrode, which are both arranged in the measuring chamber or a space which is in direct communication therewith, which are electrically insulated from one another and which are each provided with an electrical connection, so that by means of the first and second electrode the electrical conductivity of medium present in the measuring chamber can be measured.

In this way it is possible, by measuring the electrical conductivity of medium present in the measuring chamber, to determine at an early stage whether leakage through the membrane has taken place as a result of which first medium (process medium) has passed into the second medium (pressure-transfer medium) in the measuring chamber.

A preferred embodiment of the device according to the invention is defined in the subclaim.

The invention also relates to a pressure system which is equipped with a device according to the invention.

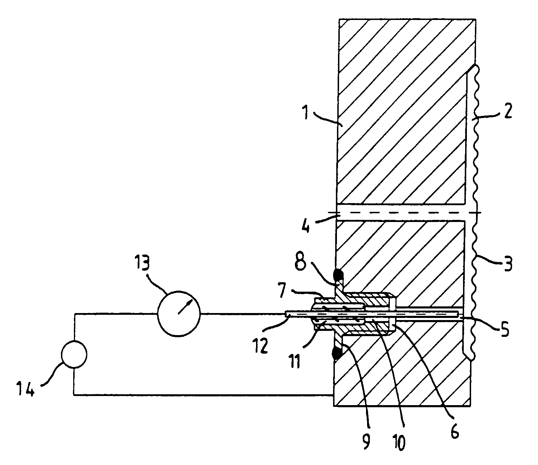

A preferred embodiment of a device according to the invention will be explained in more detail in the following text with reference to the drawing, in which the sole figure shows a cross-sectional view of a device according to the invention.

The device according to the invention comprises a housing 1, a separating membrane 3, the edge of which is connected to the housing 1 and one side of which, together with the housing 1, forms a measuring chamber 2 which can be filled with a pressure-transfer medium. The device may form part of a system for measuring the pressure of a process medium. The device is incorporated in an installation in such a manner that the side of the separating membrane 3 which faces away from the measuring chamber 2 is in contact with the process medium. The measuring chamber 2 is then filled with a pressure-transfer medium, for example oil. Via a channel 4, the measuring chamber 2 is connected, for example, to a pressure gauge (not shown). In order to be able to detect whether leakage has taken place through the membrane, the device is provided with a detection member, which will be described in more detail below and by means of which the electrical conductivity (unit of conductance is Siemens = S = 1/Ω) of the pressure-transfer medium can be measured.

A first bore 5, which is in communication with the measuring chamber 2, is arranged in the housing 1. On that side of the first bore 5 which faces away from the measuring chamber 2, a second bore 6 is made in the housing 1, the axis of which second bore coincides with the axis of the first bore 5. The diameter of the first bore 5 is smaller than the diameter of the second bore 6. The second bore 6 is provided with an internal screw thread and has a length which corresponds to the length of a nipple 7. The nipple 7 is provided with an external screw thread and is screwed into the second bore 6. A flange 8 arranged on the nipple 7 comes to rest in a corresponding recess 9 in the housing 1 and at its peripheral edge is welded securely to the housing 1.

A third bore 10 is arranged in the nipple 7, the axis of which third bore 10, when the nipple 7 is mounted in the housing 1, coincides with the axis of the first bore 5.

An insulator 11, through which a pin 12 is inserted, is arranged in the third bore 10. The insulator 11 provides electrical insulation between the pin 12 and the housing 1. The pin 12 projects through all the bores 5, 6, 10, as far as the measuring chamber 2.

That part of the pin 12 which projects beyond the nipple 7 and is not situated in the housing 1 is connected to a terminal of a voltage source 14, the housing 1 being connected to the other terminal of the voltage source 14. A current now starts to flow, the intensity of which current is dependent on the conductivity of the pressure-transfer medium between the pin 12 and the housing 1. The conductance is measured with the aid of conductivity meter 13.

If open communication is produced between the measuring chamber 2 and the process side of the separating membrane 3, for example a leak in the separating membrane 3, and process medium passes into the pressure-transfer medium, the conductivity of the pressure-transfer medium changes, and consequently so does the conductance measured by the conductivity meter 13. A change in the conductance zwith respect to a predetermined reference value thus indicates that the pressure-transfer medium no longer has its original composition. It can then be concluded that a leak has arisen, as a result of which process medium has passed into the pressure-transfer medium. The device can be repaired or replaced before any serious damage occurs.

The nipple 7 and the pin 12 of the detection means are preferably made from fernico, an alloy of iron, nickel and cobalt which has a high chemical resistance. Moreover, the pin 12 is preferably provided with a layer of gold.

In order to prevent leakage from arising in the fernico nipple 7, it is important that the insulator 11 has the same coefficient of expansion as the fernico nipple 7 and the fernico pin 12. For this reason, the insulator 11 is preferably made of glass. Obviously, any other electrically insulating material which has a coefficient of expansion equal to the coefficient of expansion of fernico is suitable for producing the insulator 11.

It is important when selecting the materials for the detection means that the materials have a high chemical resistance and identical coefficients of expansion.

The device according to the invention may also be connected via the channel 4 to any other apparatus, instrument and/or sensor which makes use of the pressure of the process medium.

## Claims

1. Device for transferring a pressure prevailing in a first medium to a second medium, comprising a housing, a membrane, the edge of which is connected to the housing and one side of which, together with the housing, forms a measuring chamber which can be filled with the second medium, and the other side of which can be brought into contact with the first medium, and a detection means, by means of which, when the measuring chamber has been filled with second medium, the presence of a leak in the membrane can be detected, characterized in that the detection means comprises a first and a second electrode, which are both arranged in the measuring chamber (2) or a space which is in direct communication therewith, which are electrically insulated from one another and which are each provided with an electrical connection, so that by means of the first and second electrode the electrical conductivity of medium present in the measuring chamber (2) can be measured.

2. Device according to claim 1, characterized in that the first electrode is formed by a pin (12) which is arranged in a bore (5) in the housing (1), which bore is in communication with the measuring chamber (2), and in that the second electrode is formed by the housing (1) itself.

3. Pressure system provided with a device according to claim 1 or 2.
